# EUROPÄISCHE PATENTSCHRIFT

(11) **EP 2 001 733 B1**
(45) Veröffentlichungstag und Bekanntmachung des Hinweises auf die Patenterteilung: **26.12.2012**
(21) Anmeldenummer: 07723573.7
(22) Anmeldetag: 24.03.2007
(51) Int. Cl.: B62K 25/08, B62K 25/16, B62K 25/24

(54) **MOTORRAD MIT EINER VORDERRADAUFHÄNGUNG**
MOTOR CYCLE WITH FRONT WHEEL SUSPENSION
MOTOCYCLETTE AVEC SUSPENSION DE ROUE AVANT

(30) Priorität: 06.04.2006 DE 102006016183
(43) Veröffentlichungstag der Anmeldung: 17.12.2008
(73) Patentinhaber: Bayerische Motoren Werke Aktiengesellschaft, 80809 München (DE)
(72) Erfinder: HEYL, Gerrit, 82131 Gauting (DE); SEIDL, Josef, 84130 Dingolfing (DE)
(86) Internationale Anmeldenummer: PCT/EP2007/002626
(87) Internationale Veröffentlichungsnummer: WO 2007/115668

(56) Entgegenhaltungen:
- DE-A1- 3 708 579
- DE-A1- 10 245 983
- DE-U1- 9 013 180
- US-A- 3 549 167
- US-A- 4 179 135

## Beschreibung

Die vorliegende Erfindung betrifft ein Motorrad mit einer Vorderradaufhängung gemäß dem Oberbegriff des Patentanspruches 1.

Ein derartiges Motorrad ist aus der DE 37 08 579 A1 bekannt. Zum technischen Hintergrund der Erfindung zählen die US 4 179 135, US 3 549 167, DE 90 13 180 U1 sowie die DE 102 45 983 A1.

Das Motorrad "K1200 S" von BMW weist eine Vorderradaufhängung auf, die unter der Bezeichnung "Duolever" bekannt ist. Kinematisch betrachtet ist die Duolever-Vorderradaufhängung ein Gelenkviereck, das durch zwei übereinander angeordnete, jeweils schwenkbar am Rahmen oder an einem Motorgehäuse gelagerte Längslenker gebildet ist. Vordere Enden der Längslenker sind jeweils über ein Kugelgelenk mit einem gabelartigen Radträger verbunden, der bei der K1200 S einteilig aus Aluminiumkokillenguss hergestellt ist. Die Federung und Dämpfung übernimmt ein Federbein, das am unteren der beiden Längslenker angelenkt ist und das sich gegen den Rahmen abstützt. Ein am "Steuerkopf" und Radträger gelagertes, trapezförmiges Scherengelenk ist mit dem Lenker gekoppelt und überträgt die über den Lenker eingesteuerten Lenkbewegungen auf den Radträger.

Aufgabe der Erfindung ist es, ein Motorrad mit einer Vorderradaufhängung, insbesondere einer so genannten "Telelever-Vorderradaufhängung", zu schaffen, die insbesondere in Bezug auf über das Vorderrad in den Radträger eingeleitete "Schlagkräfte", wie sie z. B. beim Überfahren von Hindernissen auftreten, einen noch besseren Fahrkomfort bietet.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Motorrad mit einer Vorderradaufhängung, insbesondere einer "Duolever-Vorderradaufhängung", die jedoch nicht Bestandteil der vorliegenden Erfindung ist. Wenngleich die Erfindung im folgenden überwiegend anhand einer Duolever-Vorderradaufhängung beschrieben wird, sei ausdrücklich darauf hingewiesen, dass die Erfindung insbesondere bei der von BMW-Motorrädem seit langem bekannten so genannten "Telelever-Vorderradaufhängung" anwendbar ist, die sich durch eine Teleskopgabel auszeichnet, deren untere Gabelrohre über einen Längslenker gelenkig am Rahmen oder am Motorgehäuse des Motorrads abgestützt sind.

Eine Duolever-Vorderradaufhängung weist einen gabelartigen Radträger mit zwei starren Gabelarmen auf, an denen ein Vorderrad des Motorrads gelagert ist. Bei dem Radträger kann es sich beispielsweise um ein Aluminiumgussteil handeln. Der Radträger ist mittels zweier schwenkbar übereinander angeordneter Längslenker am Motorrad aufgehängt. Hintere Enden der Längslenker können z. B. über Schwenkgelenke mit dem Rahmen bzw. mit dem Motorgehäuse des Motorrads verbunden sein. Die Längslenker sind zur Aufnahme von über das Vorderrad in den Radträger eingeleiteten Kräften vorgesehen und ermöglichen ein Ein- bzw. Ausfedern des Radträgers. Jeder der beiden Längslenker kann zwei Arme aufweisen, deren hintere Enden auf der linken bzw. auf der rechten Seite des Motorrads mit dem Motorradrahmen oder mit dem Motorgehäuse schwenkbar verbunden sind. Nach vorne hin laufen die beiden Arme eines jeden der beiden Längslenker zusammen und sind dort jeweils über ein Kugelgelenk mit dem Radträger verbunden.

Der Kern der Erfindung besteht in einer Telelever-Vorderradaufhängung, bei der das Kugelgelenk, über das der Längslenker mit der die unteren die Gabelrohre der Teleskopgabel verbindenden Gabelbrücke verbunden ist, elastisch mit dem Längslenker und/oder mit der zugeordneten Gabelbrücke verbunden ist. Ein Motorrad mit einer erfindungsgemäßen "Telelever-Vorderradaufhängung" weist also mindestens folgende Merkmale auf:
- eine Teleskopgabel, mit zwei oberen und zwei relativ dazu verschieblichen unteren Gabelrohren,
- eine Gabelbrücke, welche die beiden unteren Gabelrohre miteinander verbindet,
- einen Längslenker, mit einem in Fahrtrichtung gesehen vorderen Ende, das über ein Gelenk (20) mit der Gabelbrücke verbunden ist, wobei das Gelenk elastisch mit dem Längslenker oder/und mit der Gabelbrücke verbunden ist.

Der Begriff "elastisch" bedeutet in diesem Zusammenhang, dass primär in Fahrtrichtung über das Vorderrad in den Radträger eingeleitete Schläge, z. B. beim Überfahren von Hindernissen, in gewissem Umfang "abgefedert" werden können, d. h. nicht völlig ungefedert vom Radträger über die Gelenke in die Längslenker und weiter in den Motorradrahmen bzw. das Motorgehäuse eingeleitet werden.

Ausdrücklich sei erwähnt, dass sämtliche nachfolgend beschriebenen Merkmale bzw. Merkmalskombinationen, welche die elastische Anbindung des Kugelgelenks bzw. der Kugelgelenke beim Duolever an den zugeordneten Längslenker bzw. an den Radträger betreffen, in konstruktiv gleicher Weise auch auf die elastische Anbindung des Kugelgelenks einer Telelever-Vorderradaufhängung anwendbar sind, bei der, wie oben beschrieben, die die unteren Gabelrohre verbindende Gabelbrücke über ein Kugelgelenk mit einem Längslenker verbunden ist, der wiederum gelenkig mit dem Rahmen bzw. mit dem Motorgehäuse des Motorrads verbunden ist.

Bei einer Duolever-Vorderradaufhängung ist vorzugsweise zumindest das Gelenk, über das der obere Längslenker mit dem Radträger verbunden ist, elastisch "angebunden". Wie bereits erwähnt, kann wahlweise zwischen dem Gelenk bzw. den Gelenken und dem Radträger oder/und zwischen dem Gelenk bzw. den Gelenken und dem jeweils zugeordneten Längslenker eine entsprechend in Längsrichtung des Motorrads elastisch gestaltete Bauteilverbindung vorgesehen sein.

Eine derartige Längselastizität kann z. B. mittels eines Federblechs erreicht werden. Alternativ oder ergänzend dazu können Elastomerelemente verwendet werden.

Im folgenden wird die Erfindung ausführlicher im Zusammenhang mit der Zeichnung erläutert. Es zeigen:
- Figur 1: eine perspektivische Darstellung einer Vorderradaufhängung nach dem Duolever-Prinzip (nicht Bestandteil der vorliegenden Erfindung);
- Figur 2: einen oberen Längslenker, dessen Kugelgelenkaufnahme längselastisch mit dem Längslenker verbunden ist;
- Figur 3: den Längslenker der Figur 2 mit eingesetztem Kugelgelenk;
- Figur 4: einen Längsschnitt durch den Längslenker der Figur 3;
- Figur 5: eine Detaildarstellung der Gelenkaufnahme mit eingesetztem Kugelgelenk; und
- Figur 6: eine Detaildarstellung der Gelenkaufnahme.

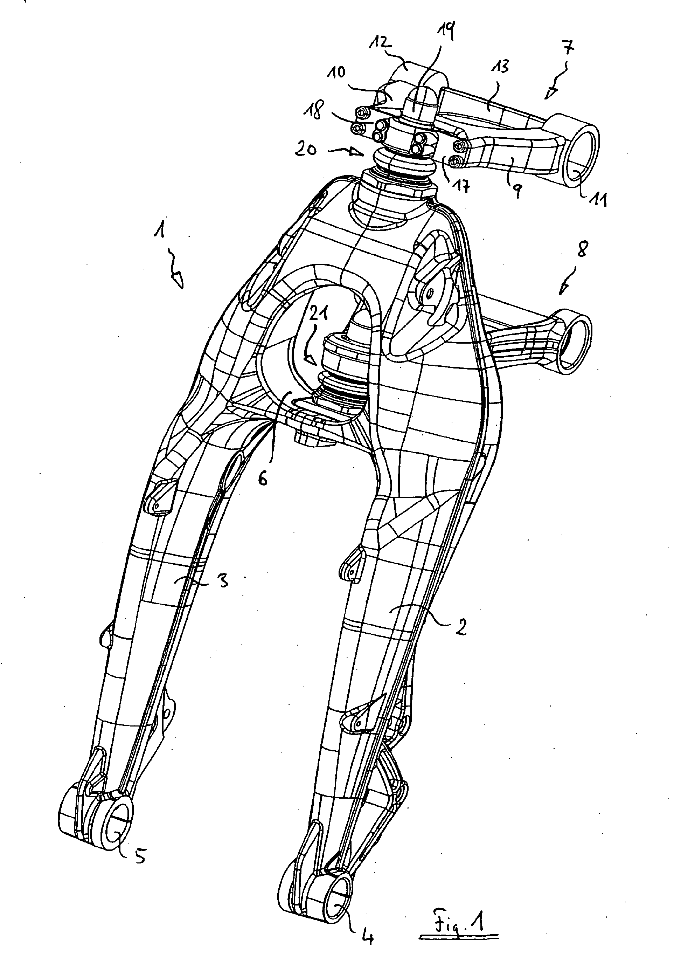

Figur 1 zeigt eine Vorderradaufhängung für Motorräder nach dem so genannten "Duolever-Prinzip". Eine derartige Vorderradaufhängung weist einen gabelartigen Vorderradträger 1 auf, der z. B. in Form eines Gussteils aus einer Aluminiumlegierung hergestellt sein kann. Der Vorderradträger 1 hat die Form einer Gabel mit einem linken Gabelholm 2 und einem rechten Gabelholm 3 an deren unteren Enden Lageraugen 4, 5 zur Aufnahme einer Achse eines Vorderrads (nicht dargestellt) vorgesehen sind. Im oberen Drittel des Vorderradträgers 1 sind die beiden Gabelholme 2, 3 durch einen Steg 6 miteinander verbunden. Die oberen Enden der Gabelholme 2, 3 laufen zusammen und sind einstückig miteinander verbunden. Der Vorderradträger 1 ist mittels eines oberen Längslenkers 7 und mittels eines unteren Längslenkers 8 an einem hier nicht dargestellten Rahmen des Motorrads schwenkbar gelagert. Der obere Längslenker 7 weist einen linken Längslenkerarm 9 und einen rechten Längslenkerarm 10 auf, an deren hinteren Enden jeweils ein Lagerauge 11 bzw. 12 vorgesehen ist. Die beiden Lageraugen sind über einen hinteren Quersteg 13 miteinander verbunden. An den Lageraugen 11, 12 ist der obere Längslenker 7 am Rahmen (nicht dargestellt) des Motorrads schwenkbar gelagert.

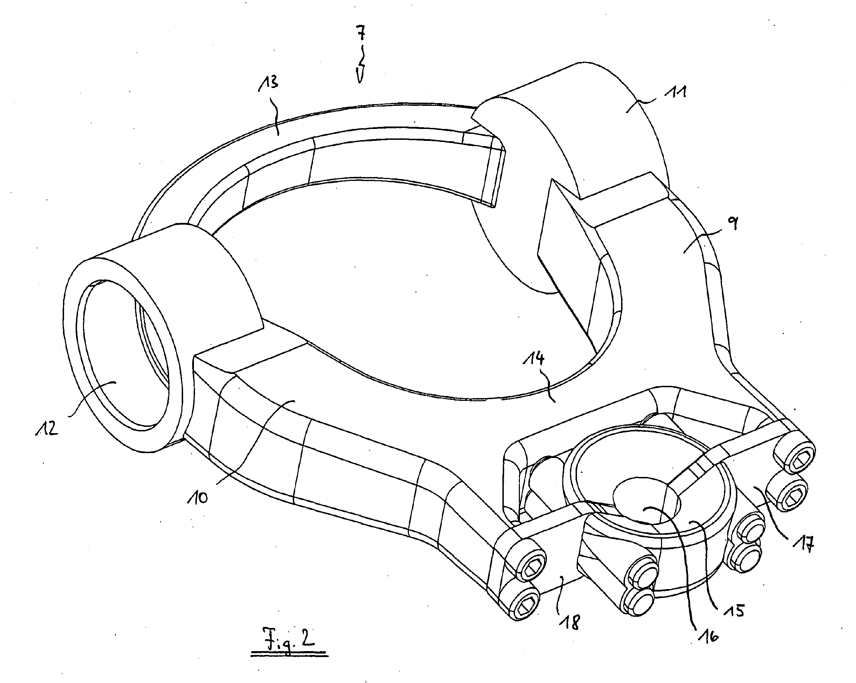

Wie aus Figur 1 bzw. 2 ersichtlich ist, laufen die beiden Längslenkerarme 9, 10 des oberen Längslenkers 7 nach vorne hin zusammen und sind durch einen vorderen Quersteg 14 miteinander verbunden. Die beiden Längslenkerarme 9, 10 reichen noch ein Stück bis vorderhalb des vorderen Querstegs 14 nach vorne, was am besten aus Figur 2 ersichtlich ist. Im Bereich zwischen den vorderen Enden der Längslenkerarme 9, 10 ist ein Gelenkaufnahmeelement 15 mit einer Durchgangsbohrung 16 vorgesehen. Das Gelenkaufnahmeelement 15 weist auf seiner linken und seiner rechten Seite jeweils einen Schlitz auf, in den ein linkes bzw. rechtes blattfederartiges Federelement 17, 18 eingesetzt ist. Die blattfederartigen Elemente sind mit dem zugeordneten Längslenkerarm 9 bzw. 10 und dem Gelenkaufnahmeelement 15 verschraubt.

Wie am besten aus Figur 2 ersichtlich ist, sind die blattfederartigen Elemente 17, 18 so angeordnet, dass ihre Hauptebene, d. h. in Figur 2 ihre Stirnseite im wesentlichen senkrecht zu den Enden der Längslenkerarme 9, 10 bzw. parallel zu einer Querachse durch die beiden Lageraugen 11, 12 des oberen Längslenkers 7 ist. Dadurch ist das Gelenkaufnahmeelement 15 relativ steif in einer Querrichtung, d. h. parallel zu einer Querachse durch die Lageraugen 11, 12 mit dem oberen Längslenker 7 verbunden. Auch in Richtung der Längsachse der Durchgangsbohrung 16 ist das Gelenkaufnahmeelement 15 relativ steif mit dem oberen Längslenker 7 verbunden.

In Längsrichtung des Motorrads bzw. in Längsrichtung der Längslenkerarme 9, 10 hingegen ist durch die blattfederartigen Elemente 17, 18 eine gewisse Elastizität sichergestellt. In gewissem Umfang kann das Gelenkaufnahmeelement 15 also in Richtung der Längsrichtung der Längslenkerarme 9, 10 verschoben werden. In gewissem Umfang ist auch eine Verdrehung des Gelenkaufnahmeelements 15 um eine Querachse, die parallel zu einer Querachse durch die Lageraugen 11, 12 ist, relativ zum oberen Längslenker 7 möglich.

Wie aus Figur 1 ersichtlich ist, ist in das Gelenkaufnahmeelement 15 ein Lagerzapfen eines oberen Kugelgelenks 20 eingesetzt. Über das obere Kugelgelenk 20 ist der obere Bereich des Radträgers 1 gelenkig mit dem oberen Längslenker 7 verbunden.

Der untere Längslenker 8, der in Figur 1 nur teilweise zu sehen ist, kann im Wesentlichen gleich gestaltet sein, wie der obere Längslenker 7. Im vorderen Bereich ist auf der untere Längslenker 8 über ein Kugelgelenk 21 mit dem Radträger 1 oder genauer gesagt mit dem Quersteg 6 des Radträgers 1 gelenkig verbunden.

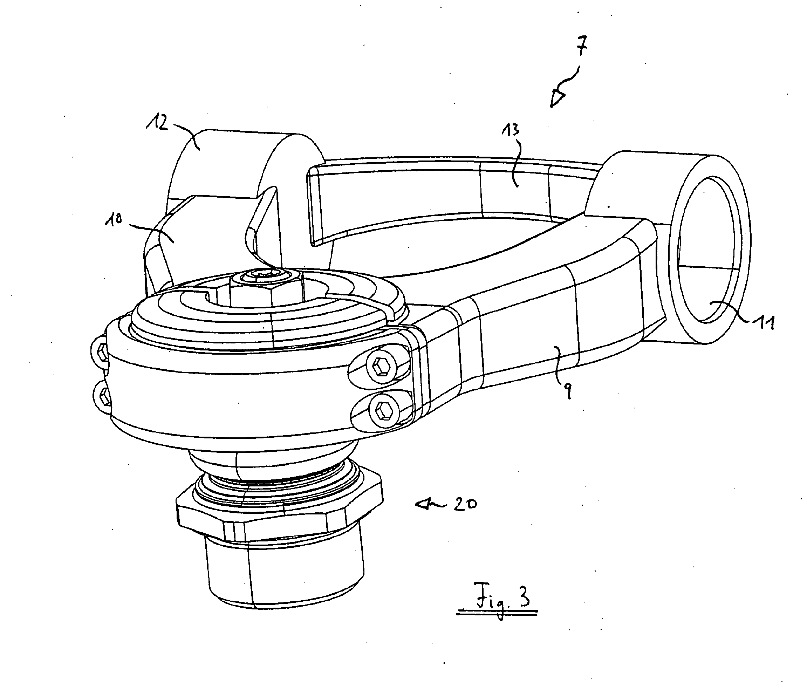

Figur 3 zeigt eine im Detailzeichnung des oberen Längsträgers 7 mit eingesetztem Kugelgelenk 20.

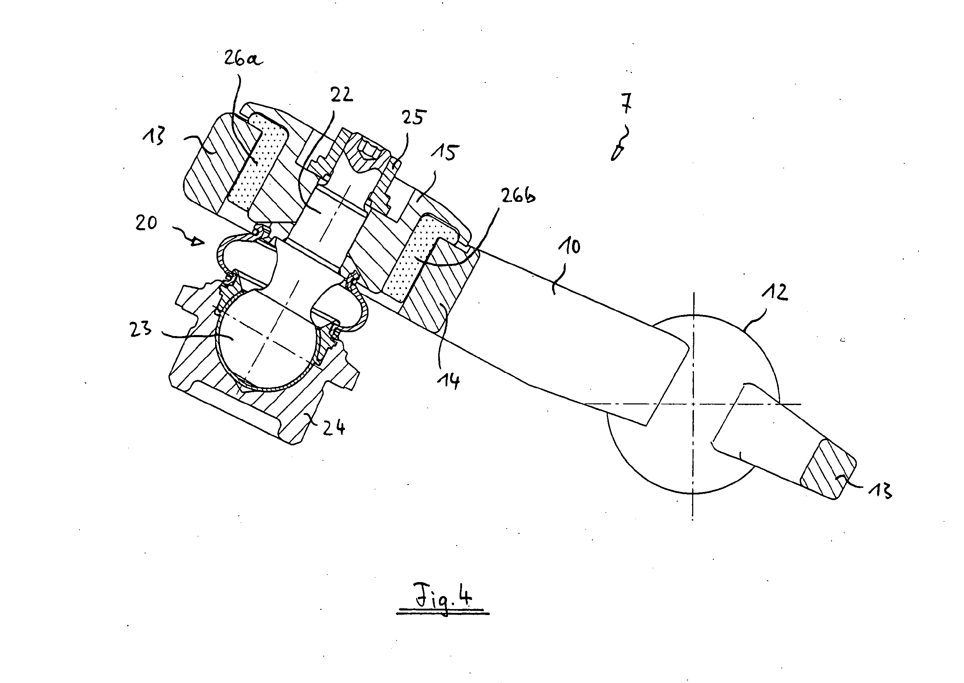

Figur 4 zeigt einen Längsschnitt durch den oberen Längsträger 7. In dieser Darstellung ist das Kugelgelenk 20 im Detail zu sehen. Das Kugelgelenk 20 weist einen Gelenkzapfen 22 auf, der mit einer Gelenkkugel 23 verbunden ist. Die Gelenkkugel 23 wiederum ist in eine Gelenkpfanne 24 eingesetzt. Die Gelenkpfanne 24 ist in eine zugeordnete Gewindebohrung eingeschraubt, die im oberen Bereich des Radträgers 1 (Figur 1) vorgesehen ist.

Der Gelenkzapfen 22 ist in das Gelenkaufnahmeelement 15 (vgl. auch Figur 2) eingesetzt und mittels einer Sicherungsmutter 25 gesichert.

Die durch den vorderen und hinteren Quersteg 13 bzw. 14 gebildete Ausnehmung weist ein "gewisses Übermaß" in Bezug auf den Außenumfang des Gelenkaufnahmeelements auf. In den dazwischen verbleibenden Ringspalt ist ein Elastomer 26a, 26b eingesetzt. Hierbei kann es sich um zwei halbringförmige Elastomerelemente handeln, zwischen denen seitlich die beiden blattfederartigen Elemente 17, 18 herausragen. Die blattfederartigen Elemente 17, 18 sind dann, entsprechend dem Ausführungsbeispiel der Figur 2 mit dem Gelenkaufnahmeelement 15 verbunden.

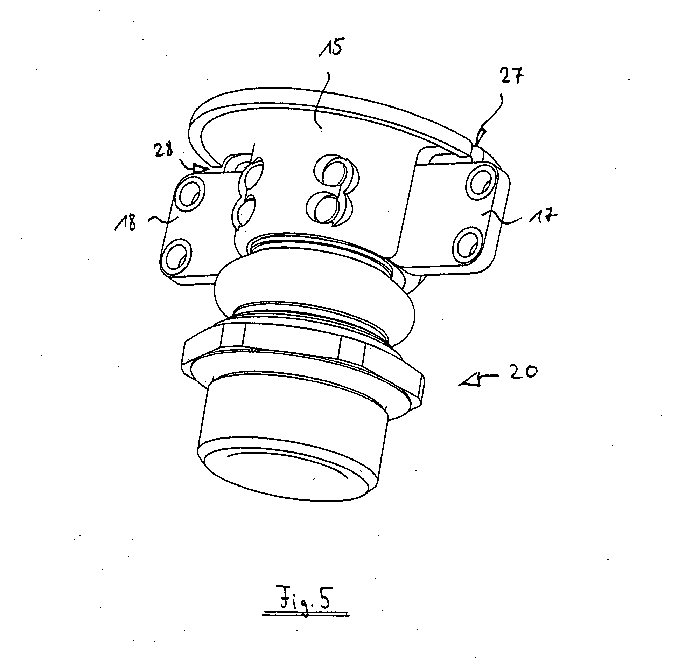

Figur 5 zeigt eine Detaildarstellung des Gelenkaufnahmeelements 15 mit eingesetztem Kugelgelenk 20. Wie aus Figur 5 ersichtlich, weist das Gelenkaufnahmeelement 15 seitliche Schlitze 27, 28 auf, in welche die blattfederartigen Elemente 17, 18 eingesetzt sind. Die blattfederartigen Elemente 17, 18 können mit dem Gelenkaufnahmeelement vernietet, verschraubt oder in sonstiger Weise verbunden sein.

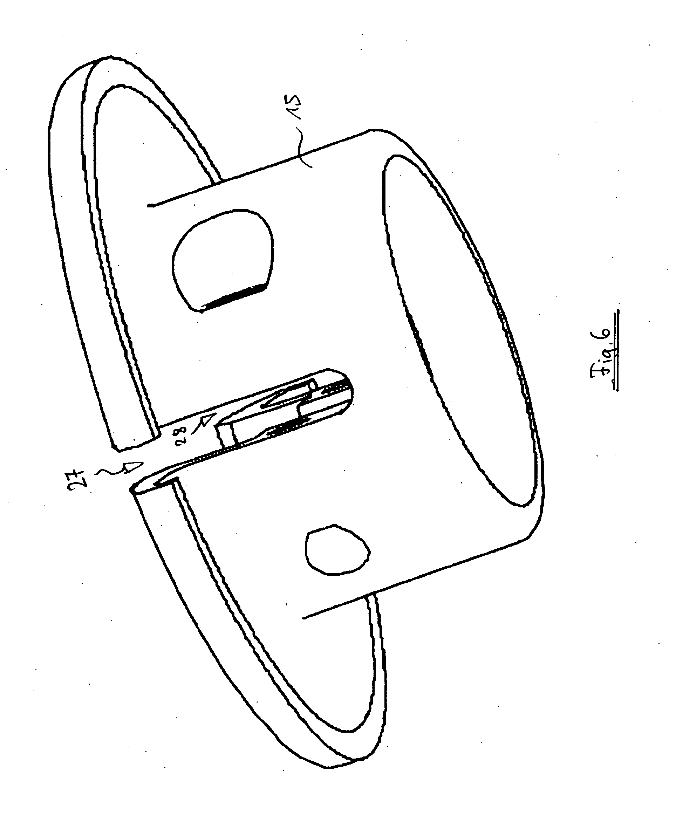

Figur 6 zeigt eine Detaildarstellung des Gelenkaufnahmeelements 15 von der Seite her gesehen. Deutlich zu erkennen sind in dieser Darstellung die beiden Aufnahmeschlitze 27, 28 zur Aufnahme der beiden blattfederartige Element 17, 18.

Ausdrücklich sei nochmals darauf hingewiesen, dass sämtliche die Verbindung des oberen Längslenkers 7 mit dem Radträger 1 betreffenden Merkmale auch bei der Verbindung, die den unteren Längsträger 8 mit dem Radträger verbindet, vorgesehen sein können.

## Patentansprüche

1. Motorrad mit einer Vorderradführung, die folgendes aufweist:
• eine Teleskopgabel, mit zwei oberen und zwei relativ dazu verschieblichen unteren Gabelrohren,
• eine Gabelbrücke, welche die beiden unteren Gabelrohre miteinander verbindet,
• einen Längslenker, der ein in Fahrtrichtung gesehen vorderes Ende aufweist, das über ein Kugelgelenk mit der Gabelbrücke verbunden ist,
**dadurch gekennzeichnet, dass**
• das Kugelgelenk (21) elastisch mit dem Längslenker oder/und mit der Gabelbrücke verbunden ist,
• das Kugelgelenk (21) einen Gelenkzapfen (22) und eine damit verbundene Gelenkkugel (23) aufweist, welche in eine Gelenkpfanne (24) eingesetzt ist und
• das Kugelgelenk (20) gelenkzapfenseitig oder/und gelenkpfannenseitig elastisch mit dem zugeordneten Längslenker (7, 8) oder/und mit der Gabelbrücke verbunden ist.

2. Motorrad nach Anspruch 1, **dadurch gekennzeichnet, dass** der Gelenkzapfen (22) bzw. die Gelenkpfanne (24) in eine Gelenkaufnahme (15) eingesetzt bzw. eingeschraubt ist, wobei die Gelenkaufnahme (15) über mindestens ein Federelement (17, 18) elastisch mit dem zugeordneten Längslenker (7, 8) verbunden ist.

3. Motorrad nach Anspruch 2, **dadurch gekennzeichnet, dass** das mindestens eine Federelement (17, 18) in einer ersten Richtung, die im wesentlichen in Motorradlängsrichtung weist und die senkrecht zu dem Gelenkzapfen ist, elastisch ist und in Richtungen, die senkrecht zur ersten Richtung sind, im wesentlichen inelastisch ist.

4. Motorrad nach einem der Ansprüche 1 bis 3, **dadurch gekennzeichnet, dass** der Längslenker (7, 8) zwei Längslenkerarme (9, 10) aufweist, zwischen deren Enden die Gelenkaufnahme (15) mittig angeordnet ist.

5. Motorrad nach Anspruch 4, **dadurch gekennzeichnet, dass** die Gelenkaufnahme (15) über Federbleche (17, 18) mit den Enden der Längslenkerarme (9, 10) verbunden ist.

6. Motorrad nach einem der vorangehenden Ansprüche 4 oder 5, **dadurch gekennzeichnet, dass** die Gelenkaufnahme (15) über ein erstes Federblech (17) mit dem Ende des einen Lenkerarms (9) und über ein zweites Federblech (18) mit dem Ende des zweiten Lenkerarms (10) verbunden ist.

7. Motorrad nach einem der Ansprüche 4 bis 6, **dadurch gekennzeichnet, dass** die durch das bzw. die Federbleche (17, 18) definierte Hauptebene im wesentlichen senkrecht zu den Enden des zugeordneten oberen bzw. unteren Längslenkerarms (7, 8) ist.

8. Motorrad nach einem der Ansprüche 4 bis 7, **dadurch gekennzeichnet, dass** die Gelenkaufnahme (15) in eine im Bereich der Enden der Lenkerarme (9, 10) vorgesehene ringförmige Öffnung des zugeordneten Längslenkers (7, 8) eingesetzt ist, wobei in einen durch den Außenumfang der Gelenkaufnahme (15) und die ringförmige Öffnung gebildeten Ringspalt ein Elastomer (26a, 26b) eingesetzt ist.

## Claims

1. A motorcycle with a front wheel suspension, comprising the following:
• a telescopic fork with two top pipes and two bottom pipes movable relative to the top pipes,
• a bridge connecting the two bottom fork pipes and
• a longitudinal swinging arm having a front end in the direction of travel and connected to the bridge by a ball joint
**characterised in that**
• the ball joint (21) is resiliently connected to the longitudinal swinging arm or to the bridge,
• the ball joint (21) has a pivot pin (22) connected to a ball (23) inserted in a socket (24) and
• the pin side and/or the socket side of the ball joint (20) is resiliently connected to the associated longitudinal swinging arm(7,8) and/or to the bridge.

2. A motorcycle according to claim 1, **characterised in that** the pin (22) or socket (24) is inserted or screwed into a holder (15), wherein the holder (15) is resiliently connected to the associated arm (7,8) by at least one spring element (17,18).

3. A motorcycle according to claim 2, **characterised in that** the at least one spring element (17,18) is elastic in a first direction substantially in the longitudinal direction of the engine and perpendicular to the pin, and substantially non-elastic in directions perpendicular to the first direction.

4. A motorcycle according to any of claims 1 to 3, **characterised in that** the longitudinal arm (7,8) has two arms (9,10) having ends between which the holder (15) is centrally disposed.

5. A motorcycle according to claim 4, **characterised in that** the holder (15) is connected to the ends of the arms (9,10) by spring steel sheets (17,18).

6. A motorcycle according to one of the preceding claims 4 or 5, **characterised in that** the holder (15) is connected to the end of one arm (9) by a first spring steel sheet (17) and to the end of the second arm (10) by a second spring steel sheet (18).

7. A motorcycle according to any of claims 4 to 6, **characterised in that** the main plane defined by the sheet or sheets (17,18) is substantially perpendicular to the ends of the associated top and/or bottom arm (7,8).

8. A motorcycle according to ant of claims 4 to 7, **characterised in that** the holder (15) is inserted into an annular opening in the associated arm (7,8) near the ends of the arms (9,10), wherein an elastomer (26a, 26b) is inserted into the annular gap formed by the annular opening and the outer periphery of the holder.

## Revendications

1. Motocyclette comportant une suspension de roue avant comprenant :
- une fourche télescopique comportant deux tubes de fourche supérieurs et deux tubes de fourche inférieurs susceptibles de coulisser par rapport aux tubes de fourche supérieurs,
- un pont de fourche qui relie les deux tubes de fourche inférieurs,
- un bras oscillant longitudinal comportant dans le sens du déplacement une extrémité avant qui est reliée au pont de fourche par l'intermédiaire d'une articulation sphérique,
**caractérisée en ce que**
- l'articulation sphérique (21) est reliée élastiquement au bras oscillant longitudinal et/ou au pont de fourche,
- l'articulation sphérique (21) comporte un pivot (22) et une rotule (23) reliée à celui-ci et logée dans une coupelle (24), et
- l'articulation sphérique (20) est reliée élastiquement, côté pivot et/ou côté coupelle avec le bras oscillant longitudinal (7, 8) associé et/ou avec le pont de fourche.

2. Motocyclette conforme à la revendication 1,
**caractérisée en ce que**
le pivot (22) ou la coupelle (24) est logé ou vissé dans un élément de réception (15), cet élément (15) étant relié élastiquement par au moins un élément élastique (17, 18) avec le bras oscillant longitudinal (7, 8) associé.

3. Motocyclette conforme à la revendication 2,
**caractérisée en ce que**
le ou les élément(s) élastique(s) (17, 18) est(sont) élastique(s) dans une première direction qui s'étend essentiellement dans la direction longitudinale de la motocyclette et est perpendiculaire au pivot de l'articulation, et n'est(ne sont) essentiellement pas élastique(s) dans des directions s'étendant perpendiculairement à la première direction.

4. Motocyclette conforme à l'une des revendications 1 à 3,
**caractérisée en ce que**
le bras oscillant longitudinal (7, 8) comporte deux branches (9, 10) à la partie médiane des extrémités desquelles est monté l'élément de réception (15).

5. Motocyclette conforme à la revendication 4,
**caractérisée en ce que**
l'élément de réception (15) est relié aux extrémités des branches (9, 10) du bras oscillant longitudinal par l'intermédiaire de tôles élastiques (17, 18).

6. Motocyclette conforme à l'une des revendications 4 ou 5, **caractérisée en ce que**
l'élément de réception (15) est relié par l'intermédiaire d'une première tôle métallique (17) à l'extrémité de l'une des branches (9) du bras oscillant et par l'intermédiaire de l'autre tôle élastique (18) à l'extrémité de la seconde branche (10) du bras oscillant.

7. Motocyclette conforme à l'une des revendications 4 à 6,
**caractérisée en ce que**
le plan principal défini par la ou les tôle(s) élastique(s) (17, 18) est essentiellement perpendiculaire aux extrémités des branches du bras oscillant longitudinal supérieur ou inférieur (7, 8) associé.

8. Motocyclette conforme à l'une des revendications 4 à 7,
**caractérisée en ce que**
l'élément de réception (15) est logé dans une ouverture annulaire du bras oscillant longitudinal (7, 8) associé prévue dans la zone des extrémités des branches (9, 10) de ce bras oscillant, un élastomère (26a, 26b) étant logé dans une fente annulaire formée par la périphérie externe de l'élément de réception (15) et l'ouverture annulaire.
